# EUROPÄISCHE PATENTSCHRIFT

(11) **EP 1 701 562 B1**
(45) Veröffentlichungstag und Bekanntmachung des Hinweises auf die Patenterteilung: **01.07.2015**
(21) Anmeldenummer: 06110515.1
(22) Anmeldetag: 28.02.2006
(51) Int. Cl.: H04W 4/08, H04W 72/00

(54) **Verfahren und System zum Optimieren der Kapazität eines Mobilfunknetzes**
Method and system to optimise the capacity of a mobile communication network
Procédé et système pour optimiser la capacité d'un système de communication mobile

(30) Priorität: 09.03.2005 DE 102005011177
(43) Veröffentlichungstag der Anmeldung: 13.09.2006
(73) Patentinhaber: Vodafone Holding GmbH, 40213 Düsseldorf (DE)
(72) Erfinder: Holzer, Harald, 76698 Ubstadt-Weiher (DE); Groß-Weege, Josef, 47918 Tönisvorst (DE)
(74) Vertreter: Ring & Weisbrodt

(56) Entgegenhaltungen:
- WO-A-00/35231
- WO-A-01/58085
- OMA OPEN MOBILE ALLICANCE: "Push to talk over Cellular (PoC) - Architecture Draft Version 1.0 Open Mobile Alliance OMA-AD_PoC-V1_0-20041117-D" OMA, 17. November 2004 (2004-11-17), Seiten 1-1152, XP002372965

## Beschreibung

### Technisches Gebiet

Die Erfindung betrifft ein Verfahren zum Optimieren der Kapazität eines Mobilfunknetzes, welches wenigstens eine Base Station BS, einen Base Station Controller BSC und eine Vermittlungsstelle MSC aufweist, wobei
a) wenigstens eine Gruppe von Mobilfunkteilnehmern vorgesehen ist und jeder Mobilfunkteilnehmer über ein Mobilfunkendgerät verfügt, mit dem über das Mobilfunknetz kommuniziert wird;
b) den Mobilfunkendgeräten *nur* ein Funkkanal mit *nur* einem Zeitschlitz durch die Base Station BS zugeordnet wird, in denen für die *unidirektionale* Kommunikation die Signalübertragung erfolgt.

Ferner betrifft die Erfindung ein System zum Optimieren der Kapazität eines Mobilfunknetzes, welches wenigstens eine Base Station BS, einen Base Station Controller BSC und eine Vermittlungsstelle MSC aufweist, enthaltend
a) Kommunikationsmittel für wenigstens eine Gruppe von Mobilfunkteilnehmern, wobei jeder Mobilfunkteilnehmer über ein Mobilfunkendgerät zum Kommunizieren über das Mobilfunknetz verfügt,
b) Mittel zum Zuordnen *nur* eines Funkkanals mit *nur* einem Zeitschlitz zu den Mobilfunkendgeräten durch die Base Station BS,
c) Übertragungsmittel zum *unidirektionalen* Übertragen von Signalen in dem zugeordneten Zeitschlitz des Funkkanals.

### Stand der Technik

Mobilfunknetze, insbesondere nach dem GSM- und UMTS-Standard, welche jeweils wenigstens eine Base Station BS, einen Base Station Controller BSC und eine Vermittlungsstelle MSC aufweisen, werden mittlerweile häufig von bspw. Polizei, Feuerwehr, Technisches Hilfswerk und anderen vergleichbaren Gruppen zur Kommunikation verwendet. Solche Gruppen werden mit Mobilfunkendgeräten ausgerüstet, damit sie Anweisungen, meistens von einer Leitstelle, erhalten können. Dabei wird für jeden Gruppenteilnehmer jeweils ein eigener Übertragungskanal zur Verfügung gestellt, über den die Gruppenteilnehmer untereinander kommunizieren können. Bei größeren Gruppen können enorme Kapazitäten des Mobilfunknetzes beansprucht werden.

Die Verbindung zwischen der Base Station BS und dem Mobilfunkendgerät eines Mobilfunkteilnehmers besteht regelmäßig aus einer Funkschnittstelle. Von der Base Station BS wird den Mobilfunkteilnehmern, womit hier auch die Gruppenmitglieder eingeschlossen sind, ein Übertragungskanal zugeordnet. Der Übertragungskanal zwischen einem Mobilfunkendgerät und dem Mobilfunknetz wird beispielsweise beim GSM-Standard nach dem TDMA-Verfahren aufgebaut. Beim TDMA-Verfahren (= engl.: Time Division Multiple Access) handelt es sich um einen Zeitmultiplex-Zugriff in der digitalen Übertragungstechnologie. TDMA erlaubt den Nutzern eine Radiofrequenz ohne Unterbrechung zu nutzen. Dazu wird beim TDMA-Verfahren ein Übertragungskanal in sechs Zeitschlitze (= engl.: time slots) unterteilt, von denen je einer einem Nutzer während der gesamten Übertragung exklusiv zugewiesen wird. Die Vorteile von TDMA liegen darin, dass Störungen durch zeitgleich ablaufende Übertragungen praktisch ausgeschlossen werden können.

Für jeden Zeitschlitz, beispielsweise nach dem TDMA-Verfahren, der eine Kommunikationsverbindung zwischen einem Mobilfunkendgerät und einer Base Station Controller BSC repräsentiert, muss eine entsprechende Übertragungszeit zwischen Base Station Controller BSC und Vermittlungsstelle MSC reserviert werden, unabhängig davon, ob in dieser Zeit Daten übertragen werden oder nicht. An dieser Stelle werden in einem Mobilfunknetz enorme Kapazitäten, besonders bei Gruppen, benötigt. Um diese Kapazitäten in einem Mobilfunknetz in ausreichendem Maße zur Verfügungsfügung zu stellen, ist ein großer technischer und finanzieller Einsatz erforderlich.

Die Verbindung zwischen den Base Stations BS und einem Base Station Controller BSC kann als Funkverbindungen, aber auch als Festnetzleitungen ausgebildet sein. Gleiches gilt für die Verbindung zwischen Base Station Controller BSC und Vermittlungsstelle MSC.

*In der Druckschrift WO 01*/*58085 wird ein IP-basiertes Netz in einem Basis Station System (BSS) für Mobilfunknetze offenbart. Dazu enthält das BSS neben Basisstationen auch Router und ein IP-Gateway. Über das IP-Gateway werden bidirektionale Verbindungen von dem BSS zu einer leitungsorientierten Mobilfunkvermittlungsstelle MSC realisiert. Funkverbindungen zwischen den Basisstationen und Mobilfunkendgeräten werden je nach verwendetem Dienst (z.B. Sprachtelefonie, Gruppenruf oder Sprachrundruf) unidirektional oder bidirektional aufgebaut. Verbindungen innerhalb des BSS werden paketorientiert von den Routern verwirklicht.*

*Die Druckschrift WO 00*/*35231 beschreibt ein privates Bündelfunksystem mit einem stationären Funknetz mit Basisstationen und Mobilfunkgeräten. Während einer bidirektionalen Funkverbindung zwischen zwei Mobilfunkgeräten wird den übrigen Mobilfunkgeräten ein Zuhören über unidirektionale Funkverbindungen ermöglicht. Die Basisstationen sind über Kabel- oder Mikrowellenverbindungen bidirektional miteinander verbunden.*

*In dem Dokument "*Push to talk over Cellular (PoC) - Architecture Draft Version 1.0 Open Mobile Alliance OMA-AD_PoC-V1_0-20041117-D", OMA, 17.11.2004, XP-002372965 *werden IP-basierte PoC-Sitzungen für Mobilfunkendgeräte spezifiziert. Dazu werden PoC-Clients und PoC-Server, sowie das SIP-, RTP- und RTCP-Protokol verwendet. Eine Übertragung von Sprach-, Bild-, Video-, Multimedia- oder anderen Daten erfolgt paketorientiert.*

### Offenbarung der Neuerung

Aufgabe der Erfindung ist es bestehende Nachteile des Standes der Technik zu beseitigen. Es ist insbesondere ein Anliegen der Erfindung ein Verfahren oder ein System zu schaffen, welches die begrenzten Ressourcen eines Mobilfunknetzes optimal ausnutzt.

Erfindungsgemäß wird die Aufgabe dadurch gelöst, dass bei einem Verfahren zum Optimieren der Kapazität eines Mobilfunknetzes der eingangs genannten Art
c) für die Gruppe nur ein separater, *unidirektionaler* Übertragungskanal zwischen einem Base Station Controller BSC und der Vermittlungsstelle MSC zugewiesen wird, über den nur ein Sprecher der Gruppe mit seinem Mobilfunkendgerät die übrigen Gruppenmitglieder unidirektional erreicht *und die Vermittlungsstelle (MSC) Sprechanforderungen verwaltet und nur einen Sprecher in einer Gruppe zulässt.*

Ferner wird die Aufgabe durch ein System zum Optimieren der Kapazität eines Mobilfunknetzes der eingangs genannten Art gelöst *durch*
d) Mittel zum Zuweisen eines separaten, *unidirektionalen* Übertragungskanals für die Gruppe je Base Station Controller BSC und Vermittlungsstelle MSC und
e) Kommunikationsmittel zum unidirektionalen Erreichen der Gruppemitglieder durch einen Sprecher der Gruppe mit seinem Mobilfunkendgerät über diesen separaten Übertragungskanal *und*
*f) eine Kontrolleinrichtung in der Vernzittlungsstelle MSC zum Verwalten der Sprechanforderungen und Aktivierung nur eines Sprechers einer Gruppe.*

Der Vorteil, der sich aus dem erfindungsgemäßen Verfahren ergibt, beruht darauf, dass nunmehr nur noch ein separater Übertragungskanal für die gesamte Gruppe verwendet wird. Dabei gibt es nur einen Sprecher, der den übrigen Gruppenmitgliedern Informationen, z.B. Anweisungen, geben kann. Als Sprecher wird in diesem Zusammenhang das Mobilfunkendgerät bezeichnet, das nicht nur Informationen in Form von Sprache an die anderen Mobilfunkendgeräte der Gruppe überträgt, sondern auch Informationen in Form von digitalen Daten. Der Sprecher ist der Sender der Gruppe, während die zuhörenden Mitglieder der Gruppe die Empfänger sind. Die anderen Gruppenmitglieder sind in diesem Moment nämlich nur in der Lage, die Informationen des Sprechers zu empfangen. *Dabei verwaltet die Vermittlungsstelle MSC Sprechanforderungen und lässt immer nur einen Sprecher in einer Gruppe zu.* Auf diese Weise wird vermieden, dass wie beim Stand der Technik, für jedes Gruppenmitglied ein eigener Übertragungskanal zur Kommunikation mit Teilnehmern des Mobilfunknetzes zwischen Base Station Controller BSC und Vermittlungsstelle MSC aufgebaut wird. Dadurch werden Kapazitäten zwischen Base Station Controller BSC und Vermittlungsstelle MSC frei, die für andere Verbindungen verwendet werden können.

Entsprechend beruht das erfindungsgemäße System auf Mitteln, die der Gruppe einen separaten Übertragungskanal zwischen ein der Base Station Controller BSC und der Vermittlungsstelle MSC zuweisen. Als Übertragungskanal wird nachfolgend jegliche Verbindung und Übertragungsmöglichkeit zwischen zwei Komponenten bezeichnet, über die Information ausgetauscht werden kann. Dies schließt eine Festnetzleitung oder Funkverbindungen ein. Die zu übertragenden Informationen, d.h. digitale Daten (auch die digitalisierte Sprache) können dabei insbesondere auch paketweise in äquidistanten oder nicht-äquidistanten Zeitabständen übermittelt werden. Auch eine zusammenhängende Datenübertragung über einen solchen Übertragungskanal ist denkbar.

*Dazu enthält die Vermittlungsstelle MSC des erfindungsgemäßen Systems eine Kontrolleinrichtung zum Verwalten der Sprechanforderungen und zum Aktivierung nur eines Sprechers einer Gruppe. Auf diese Weise werden entsprechend dem erfindungsgemäßen Verfahren die Wünsche der Gruppenmitglieder zu sprechen, verwaltet. Beispielsweise kann je nach zeitlicher Anfrage die Reihenfolge der Sprecher festgelegt werden Außerdem wird immer nur einem Sprecher das "Rederecht" erteilt.*

In einer vorteilhaften Ausgestaltung des erfindungsgemäßen Verfahrens ermittelt die Vermittlungsstelle MSC den aktuellen Sprecher dynamisch und ordnet ihm den separaten Übertragungskanal der Gruppe zu. Durch diese Maßnahme wird erreicht, dass ein aktueller Sprecher ermittelt wird, der dann über den separaten Übertragungskanal beispielsweise seine Anweisungen an die übrigen Gruppenmitglieder geben kann.

Vorzugsweise wird die Vermittlungsstelle MSC die jeweils beteiligten Base Station Controller BSC über den aktuellen Sprecher informieren. Damit kann erreicht werden, dass die Base Station Controller BSC keinen anderen Sprecher mehr zulassen.

Entsprechend können in einer bevorzugten Ausführung des erfindungsgemäßen Verfahrens die Base Station Controller BSC den aktuellen Sprecher dynamisch ermitteln und ihm den separaten Übertragungskanal zur Vermittlungsstelle MSC der Gruppe zuordnen. Je nach Möglichkeit und/oder auch Kapazität des Mobilfunknetzes kann somit entweder die Vermittlungsstelle MSC oder auch den Base Station Controllern BSC die Aufgabe zuteil werden, den aktuellen Sprecher zu ermitteln.

Eine bevorzugte Variante des erfindungsgemäßen Verfahrens zur Optimierung der Kapazität eines Mobilfunknetzes wird dadurch erzielt, dass die Vermittlungsstelle MSC eine Sprechanforderung eines Mobilfunkteilnehmers der Gruppe empfängt. Einem Gruppenmitglied wird es so ermöglicht, die Vermittlungsstelle aufzufordern, ihm den separaten Übertragungskanal zuzuordnen, damit er Informationen an die übrigen Mitglieder der Gruppe übermitteln kann.

Entsprechend zu dem erfindungsgemäßen Verfahren ergibt sich eine vorteilhafte Ausgestaltung des erfindungsgemäßen Systems, wenn Mittel zum dynamischen Erfassen des aktuellen Sprechers durch die Vermittlungsstelle MSC und eine Zuordnungseinheit zum Zuordnen eines separaten Übertragungskanals vorgesehen sind. Damit wird ebenfalls erzielt, dass ein aktueller Sprecher ermittelt wird, der dann über den separaten Übertragungskanal beispielsweise seine Anweisungen an die übrigen Gruppenmitglieder geben kann.

In einer weiteren bevorzugten Ausbildung des erfindungsgemäßen Systems sind Informationsmittel in der Vermittlungsstelle MSC zum Informieren der beteiligten Base Station Controller BSC über den aktuellen Sprecher vorgesehen. Durch diese Maßnahme haben beteiligte Base Station Controller BSC beispielsweise die erforderliche Information darüber, dass kein anderer Sprecher mehr zuzulassen ist.

Vorzugsweise sind in dem System zum Optimieren der Kapazität eines Mobilfunknetzes Mittel zum Erfassen einer Sprechanforderung eines Mobilfunkteilnehmers der Gruppe in der Vermittlungsstelle MSC vorgesehen. Damit können Wünsche von Gruppenmitgliedern aufgenommen werden, die gerne zu anderen Gruppenmitgliedern sprechen, oder ihnen andere Informationen zukommen lassen möchten

Weitere Vorteile der Erfindung ergeben sich aus dem Gegenstand der Unteransprüche, sowie der Zeichnung mit der dazugehörigen Beschreibung.

### Kurze Beschreibung der Zeichnung

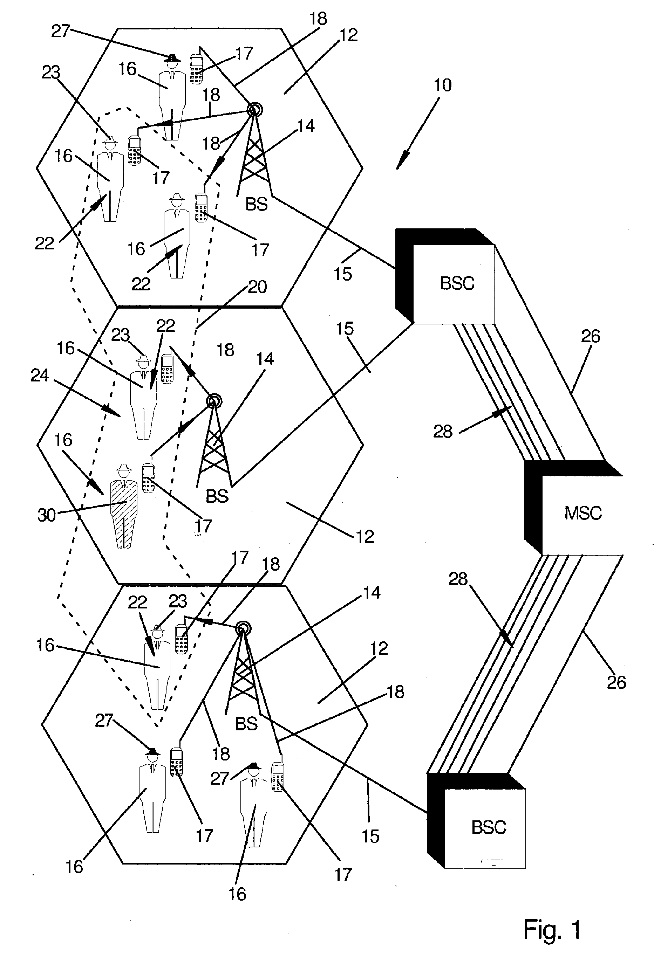

- Fig.1: zeigt in einer schematischen Prinzipskizze einen Ausschnitt eines Mobilfunknetzes, bei dem das erfindungsgemäße Verfahren bzw. System zur Optimierung der Kapazität verwendet wird.

### Bevorzugtes Ausführungsbeispiel

In der einzigen Fig. 1 wird in einer schematischen Prinzipskizze ein Ausschnitt eines Mobilfunknetzes 10 beispielsweise nach dem GSM-Standard dargestellt. Das Mobilfunknetz 10 enthält beispielhaft drei Funknetzzellen 12, welche schematisch als Sechsecke dargestellt sind. Die Funknetzzellen 12 werden real durch den Abdeckungsbereich von Base Stationens BS gebildet. Die Base Stationen BS werden im vorliegenden Ausführungsbeispiel durch Funkmasten 14 repräsentiert. Die Base Station BS dient der Versorgung einer einzelnen Funkzelle 12 mit den Dienstleistungen des jeweiligen Mobilfunknetzes 10. Beim Wechsel der Funkzelle 12 erfolgt die Übergabe der Kontrolle an die nächste Base Station BS.

Jeder Base Station BS ist insbesondere dazu ein Base Station Controller BSC zugeordnet. Die Base Stationen BS sind dazu in geeigneter Weise mit dem jeweils zuständigen Base Station Controller BSC gekoppelt, so dass ein bidirektionaler Informationsaustausch erfolgen kann, Linien 15. Ein Base Station Controller BSC kontrolliert und kommuniziert mit mehreren Base Stations BS im Umkreis Die Base Station Controller BSC sind wiederum mit einer Vermittlungsstelle MSC (=Mobile Switching Center) verbunden, an die Informationen weitergeleitet werden.

In den ausgesuchten Funknetzzellen 12 des Ausschnitts des Mobilfunknetzes 10 halten sich Mobilfunkteilnehmer 16 zur Kommunikation mit Mobilfunkendgeräten 17 über das Mobilfunknetz 10 auf. Dazu wird jeweils eine Funkverbindung 18, beispielsweise nach dem TDMA-Verfahren, mit der jeweils zuständigen Base Station BS hergestellt. Die von einer gestrichelten Linie 20 umgebenen Mobilfunkteilnehmer 16 sind alle Mitglieder 22 einer Gruppe 24. Diese Gruppenmitglieder 22 sind in der Zeichnung mit einem weißen Hut 23 kenntlich gemacht. Dieser Gruppe 24 wird zwischen den Base Station Controllern BSC und der Vermittlungsstelle MSC ein separater Übertragungskanal 26 zugewiesenen. Den Mobilfunkteilnehmern 16, welche in der Zeichnung mit einem schwarzen Hut 27 kenntlich gemacht worden sind, die nicht der Gruppe 24 angehören, wird nach wie vor ein normaler Übertragungskanal 28 zwischen den Base Station Controllern BSC und der Vermittlungsstelle MSC zur Verfügung gestellt.

Die Vermittlungsstelle MSC ermittelt einen Sprecher 30 der Gruppe 24, dem als einziger der Gruppe 24 erlaubt ist, Informationen zu versenden. Information umfasst neben Textanweisungen oder anderen digitalen Daten natürlich auch Sprache. In der Abbildung ist der Sprecher 30 schraffiert dargestellt. Einem Gruppenmitglied 22 wird Sprecher 30 der Gruppe 24, indem es bei der Vermittlungsstelle MSC nach dem entsprechenden separaten Übertragungskanal 26 anfragt. Wenn dieser separate Übertragungskanal 26 durch ein anderes Gruppenmitglied 22 der Gruppe belegt ist, kann der Anfrage zu dem Zeitpunkt durch die Vermittlungsstelle MSC nicht entsprochen werden. Die Sprechanforderungen der Gruppenmitglieder 22 werden von der Vermittlungsstelle MSC verwaltet. Die Freigabe als Sprecher 30 kann bspw. in der zeitlichen Reihenfolge der Anfragen erfolgen oder auch nach Prioritäten, die den Gruppenmitgliedern 22 zugeteilt werden. Die Vermittlungsstelle MSC informiert jederzeit die Base Station Controller BSC über den aktuellen Sprecher 30.

Die Informationen des Sprechers 30 werden nur in einer Richtung, d.h. unidirektional, an die übrigen Gruppenmitglieder 22 übermittelt. Die Informationen des Sprechers 30 der Gruppe 24 werden dabei synchron an alle Gruppenmitglieder 22 übermittelt, so dass jedes Gruppenmitglied 22 über dieselben Informationen verfügen.

Die Informationen, die über den separaten Übertragungskanal 26 übermittelt werden, werden aus Sicherheitsgründen verschlüsselt, so dass sie von Mobilfunkteilnehmern 16, die nicht der Gruppe 24 angehören, nicht abgehört werden können.

## Patentansprüche

1. Verfahren zum Optimieren der Kapazität eines Mobilfunknetzes (10), welches wenigstens eine Base Station, BS, einen Base Station Controller, BSC, und eine Vermittlungsstelle, MSC, aufweist, wobei
a) wenigstens eine Gruppe (24) von Mobilfunkteilnehmern (16) vorgesehen ist, und jeder Mobilfunkteilnehmer (16) über ein Mobilfunkendgerät (17) verfügt, mit dem über das Mobilfunknetz (10) kommuniziert wird;
b) den Mobilfunkendgeräten (17) *nur* ein Funkkanal (18) mit *nur* einem Zeitschlitz durch die Base Station, BS, zugeordnet wird, in denen für die *unidirektionale* Kommunikation die Signalübertragung erfolgt,
**dadurch gekennzeichnet, dass**
c) für die Gruppe (24) nur ein separater, *unidirektionaler* Übertragungskanal (26) zwischen einem Base Station Controller, BSC, und der Vermittlungsstelle, MSC, zugewiesen wird, über den nur ein Sprecher (30) der Gruppe (24) mit seinem Mobilfunkendgerät (17) die übrigen Gruppenmitglieder (22) unidirektional erreicht *und die Vermittlungsstelle*, *MSC, Sprechanforderungen verwaltet und nur einen Sprecher (30) in einer Gruppe (24) zulässt.*

2. Verfahren zum Optimieren der Kapazität eines Mobilfunknetzes (10) nach Anspruch 1, **dadurch gekennzeichnet, dass** die Vermittlungsstelle, MSC, den aktuellen Sprecher (30) dynamisch ermittelt und ihm den separaten Übertragungskanal (26) der Gruppe (24) zuordnet.

3. Verfahren zum Optimieren der Kapazität eines Mobilfunknetzes (10) nach einem der Ansprüche 1 oder 2, **dadurch gekennzeichnet, dass** die Vermittlungsstelle, MSC, beteiligte Base Station Controller, BSC, über den aktuellen Sprecher (30) informiert.

4. Verfahren zum Optimieren der Kapazität eines Mobilfunknetzes (10) nach einem der Ansprüche 1 bis 3, **dadurch gekennzeichnet, dass** die Base Station Controller, BSC, den aktuellen Sprecher (30) dynamisch ermitteln und ihm den separaten Übertragungskanal (26) der Gruppe (24) zuordnet.

5. Verfahren zum Optimieren der Kapazität eines Mobilfunknetzes (10) nach einem der Ansprüche 1 bis 4, **dadurch gekennzeichnet, dass** die Vermittlungsstelle, MSC, eine Sprechanforderung eines Mobilfunkteilnehmers (22) der Gruppe (24) empfängt.

6. System zum Optimieren der Kapazität eines Mobilfunknetzes (10), welches wenigstens eine Base Station, BS, einen Base Station Controller, BSC, und eine Vermittlungsstelle, MSC, aufweist, enthaltend
a) Kommunikationsmittel für wenigstens eine Gruppe (24) von Mobilfunkteilnehmern (16), wobei jeder Mobilfunkteilnehmer (16) über ein Mobilfunkendgerät (17) zum Kommunizieren über das Mobilfunknetz (10) verfügt,
b) Mittel zum Zuordnen *nur* eines Funkkanals (18) mit *nur* einem Zeitschlitz zu den Mobilfunkendgeräten (17) durch die Base Station, BS,
c) Übertragungsmittel zum *unidirektionalen* Übertragen von Signalen in dem zugeordneten Zeitschlitz des Funkkanals,
**gekennzeichnet durch**
d) Mittel zum Zuweisen eines separaten, *unidirektionalen* Übertragungskanals (26) für die Gruppe (24) je Base Station Controller, BSC, und Vermittlungsstelle, MSC, und
e) Kommunikationsmittel zum unidirektionalen Erreichen der Gruppemitglieder (22) **durch** einen Sprecher (30) der Gruppe (24) mit seinem Mobilfunkendgerät (17) über diesen separaten Übertragungskanal (26) *und*
*f) eine Kontrolleinrichtung in der Vermittlungsstelle, MSC, zum Verwalten der Sprechanforderungen und Aktivierung nur eines Sprechers (30) einer Gruppe* (24).

7. System zum Optimieren der Kapazität eines Mobilfunknetzes (10) nach Anspruch 6, **gekennzeichnet durch** Mittel zum dynamischen Erfassen des aktuellen Sprechers (30) **durch** die Vermittlungsstelle, MSC, und eine Zuordnungseinheit zum Zuordnen eines separaten Übertragungskanals (26).

8. System zum Optimieren der Kapazität eines Mobilfunknetzes (10) nach einem der Ansprüche 6 oder 7, **gekennzeichnet durch** Informationsmittel in der Vermittlungsstelle, MSC, zum Informieren der beteiligte Base Station Controller, BSC, über den aktuellen Sprecher (30).

9. System zum Optimieren der Kapazität eines Mobilfunknetzes (10) nach einem der Ansprüche 6 bis 8, **dadurch gekennzeichnet, dass** Mittel zum Erfassen einer Sprechanforderung eines Mobilfunkteilnehmers (23) der Gruppe (24) in der Vermittlungsstelle, MSC, vorgesehen sind.

## Claims

1. A method for optimizing the capacity of a mobile radio network (10) which at least comprises one base station BS, one base station controller BSC and one switching center MSC, wherein
a) at least one group (24) of mobile subscribers (16) is provided and each mobile subscriber (16) has got a mobile terminal (17), by means of which he communicates via the mobile radio network (10);
b) only one radio channel (18) with only one time slot is allocated by the base station BS to the mobile terminals (17), in which radio channel the signal transmission for the unidirectional communication will take place,
**characterized in that**
c) only one separate unidirectional transmission channel (26) between a base station controller BSC and the switching center MSC will be allocated to the group (24), via which transmission channel only one speaker (30) of the group (24) reaches the other group members (22) in a unidirectional manner by means of his mobile terminal (17), and the switching center MSC administers conversation requests and only allows one speaker (30) in one group (24).

2. A method for optimizing the capacity of a mobile radio network (10) according to claim 1, **characterized in that** the switching center MSC dynamically determines the current speaker (30) and allocates the separate transmission channel (26) of the group (24) to him.

3. A method for optimizing the capacity of a mobile radio network (10) according to one of the claims 1 or 2, **characterized in that** the switching center MSC informs participating base station controllers BSC about the current speaker.

4. A method for optimizing the capacity of a mobile radio network (10) according to one of the claims 1 through 3, **characterized in that** the base station controllers BSC dynamically determine the current speaker (30) and allocate the separate transmission channel (26) of the group (24) to him.

5. A method for optimizing the capacity of a mobile radio network (10) according to one of the claims 1 through 4, **characterized in that** the switching center MSC receives a conversation request of a mobile subscriber (22) of the group (24).

6. A system for optimizing the capacity of a mobile radio network (10) which at least comprises one base station BS, one base station controller BSC and a switching center MSC, including
a) communication means for at least one group (24) of mobile subscribers (16), wherein each mobile subscriber (16) has got a mobile terminal (17) for communicating via the mobile radio network (10),
b) means for allocating only one radio channel (18) with only one time slot to the mobile terminals (17) by the base station BS,
c) transmission means for the unidirectional transmission of signals within the allocated time slot of the radio channel,
**characterized by**
d) means for allocating one separate unidirectional transmission channel (26) to the group (24) per each base station controller BSC and switching center MSC and
e) communication means for allowing a speaker (30) of the group (24) to reach the group members (22) in a unidirectional way by means of his mobile terminal (17) via this separate transmission channel (26) and
f) a control device in the switching center MSC for administering conversation requests and activating only one speaker (30) of a group (24).

7. A system for optimizing the capacity of a mobile radio network (10) according to claim 6, **characterized by** means for dynamically determining the current speaker (30) by means of the switching center MSC and an allocation unit for allocating a separate transmission channel (26).

8. A system for optimizing the capacity of a mobile radio network (10) according to one of the claims 6 or 7, **characterized by** information means in the switching center MSC for informing the participating base station controllers BSC about the current speaker (30).

9. A system for optimizing the capacity of a mobile radio network (10) according to one of the claims 6 through 8, **characterized in that** means for detecting a conversation request of a mobile subscriber (23) of the group (24) are provided in the switching center MSC.

## Revendications

1. Procédé permettant d'optimiser la capacité d'un réseau radio mobile (10), qui comprend au moins une station de base BS, un contrôleur de station de base BSC et un commutateur MSC, dans lequel
a) au moins un groupe (24) d'abonnés mobiles (16) est prévu et chaque abonné mobile (16) a un terminal mobile (17) par moyen duquel il communique via le réseau radio mobile (10) ;
b) la station de base BS n'attribue qu'un seul canal radio (18) avec une seule tranche de temps aux terminaux mobiles (17), dans lequel canal se fait la transmission de signaux pour la communication unidirectionnelle,
**caractérisé en ce qu'**
c) un seul canal de transmission unidirectionnelle séparé (26) entre un contrôleur de station de base BSC et le commutateur MSC est attribué au groupe (24), via lequel canal seulement une personne parlant (30) du groupe (24) joint de manière unidirectionnelle les autres membres de groupe (22) par moyen de son terminal mobile (17) et le commutateur MSC administre des requêtes de communication et ne permet qu'une seule personne parlant (30) dans un groupe (24).

2. Procédé permettant d'optimiser la capacité d'un réseau radio mobile (10) selon la revendication 1, **caractérisé en ce que** le commutateur MSC détermine dynamiquement la personne parlant actuelle (30) et lui attribue le canal de transmission (26) séparé du groupe (24).

3. Procédé permettant d'optimiser la capacité d'un réseau radio mobile (10) selon l'une des revendications 1 ou 2, **caractérisé en ce que** le commutateur MSC informe des contrôleurs de station de base BSC participants sur la personne parlant actuelle (30).

4. Procédé permettant d'optimiser la capacité d'un réseau radio mobile (10) selon l'une des revendications 1 à 3, **caractérisé en ce que** les contrôleurs de station de base BSC déterminent dynamiquement la personne parlant actuelle (30) et lui attribuent le canal de transition séparé (26) du groupe (24).

5. Procédé permettant d'optimiser la capacité d'un réseau radio mobile (10) selon l'une des revendications 1 à 4, **caractérisé en ce que** le commutateur MSC reçoit une requête de conversation d'un abonné mobile (22) du groupe (24).

6. Système permettant d'optimiser la capacité d'un réseau radio mobile (10), qui comprend au moins une station de base BS, un contrôleur de station de base BSC et un commutateur MSC, comprenant
a) des moyens de communication destinés à au moins un groupe (24) d'abonnés mobiles (16), chaque abonné mobile (16) possédant un terminal mobile (17) pour communiquer via le réseau radio mobile (10),
b) des moyens d'attribution d'un seul canal radio (18) qui n'a qu'une seule tranche de temps aux terminaux mobiles (17) par la station de base BS,
c) des moyens de transmission destinés à transmettre de manière unidirectionnelle des signaux dans la tranche de temps attribuée du canal radio,
**caractérisé par**
d) des moyens destinés à attribuer un canal de transmission unidirectionnelle séparé (26) au groupe (24) par contrôleur de station de base BSC et par commutateur MSC et
e) des moyens de communication pour permettre à une personne parlant (30) du groupe (24) de joindre de façon unidirectionnelle les membres de groupe (22) par moyen de son terminal mobile (17) via ce canal de transmission séparé (26) et
f) un dispositif de contrôle au sein du commutateur MSC destiné à administrer les requêtes de conversation et à n'activer qu'une seule personne parlant (30) d'un groupe (24).

7. Système permettant d'optimiser la capacité d'un réseau radio mobile (10) selon la revendication 6, **caractérisé par** des moyens destinés à déterminer dynamiquement la personne parlant actuelle (30) par le commutateur MSC et une unité d'attribution destinée à attribuer un canal de transmission séparé (26).

8. Système permettant d'optimiser la capacité d'un réseau radio mobile (10) selon l'une des revendications 6 ou 7, **caractérisé par** des moyens d'information dans le commutateur MSC pour informer les contrôleurs de station de base BSC participants sur la personne parlant actuelle (30).

9. Système permettant d'optimiser la capacité d'un réseau radio mobile (10) selon l'une des revendications 6 à 8, **caractérisé en ce que** des moyens destinés à détecter une requête de conversation d'un abonné mobile (23) du groupe (24) sont prévus au sein du commutateur MSC.
